# EUROPEAN PATENT SPECIFICATION

(11) **EP 1 495 703 B1**
(45) Date of publication and mention of the grant of the patent: **11.02.2009**
(21) Application number: 04016069.9
(22) Date of filing: 08.07.2004
(51) Int. Cl.: A47J 31/40, A47J 31/44

(54) **Locking device sustaining high pressure for coffee maker lid**
Verriegelungsmechanismus für Deckel von Kaffeemaschinen bei hohem Druck
Dispositif de verrouillage d'un couvercle à haute pression pour machine à café

(30) Priority: 09.07.2003 US 616417
(43) Date of publication of application: 12.01.2005
(73) Proprietor: Electrical & Electronics Ltd., Tai Po, N.T., Hong Kong (CN)
(72) Inventor: Chen, Yee Mau, 53, Ting Kok Road Tai Po, N.T. (HK); Poon, Sum Fat, 53, Ting Kok Road Tai Po, N.T. (HK)
(74) Representative: Capasso, Olga

(56) References cited:
- EP-A- 1 000 574
- WO-A-01/15582
- US-A- 5 794 519
- US-A1- 2002 148 356
- US-A1- 2003 089 245

## Description

This application claims priority of U.S. Patent Application No. 10/616,417, filed July 9, 2003.

Throughout this application, various publications are referenced. Disclosures of these publications in their entireties are cited to more fully describe the state of the art to which this invention pertains.

### BACKGROUND OF THE INVENTION

This invention relates to the locking mechanism of a coffee maker using coffee pods.

The original drip-type coffee maker using ground coffee does not create any pressure and thus does not need a locking mechanism to prevent leaking. The pump espresso and automatic espresso coffee machines need a locking mechanism with more than five (5) bar back pressure to prevent leaking.

A coffee maker using coffee pods normally creates one (1) to three point five (3.5) bar pressure on the machine. Thus, a locking mechanism that is used in espresso machines with more than five (5) pressure bars is not necessary. Instead, a locking mechanism that tolerates a back pressure of up to four (4) bars is needed for the coffee maker using coffee pods.

The existing pump espresso and automatic espresso machines use an aluminum filter cup and flat silicone ring for sealing to achieve the level of tightness and closeness needed to tolerate more than five (5) pressure bars. In the known art, the operation requires that the locking mechanism be turned in a horizontal direction.

Fischer (U.S. Patent No. 5,794,519) describes an espresso machine having a upper head part which is only pivotable relative to a lower brewing head part. The brew head assembly of the present invention contains a lid mount which when opened or unlocked will move upward and rotate/pivot backward, relative to the brew head base, to allow easy access to the coffee filter by the operator.

U.S. Patent Application No. 2002/0148356 discloses a brew head assembly of a coffee maker comprising a slide assembly, a sealing assembly and a pop-up and roll-up assembly wherein the parts are not operatively linked to sustain pressure of up to four bars.

The international patent application WO 01/15582 discloses an apparatus for preparing coffee comprising a cover, a holder and clamping means of reliable construction such that even after the holder has frequently been closed and opened, a reliable seal between cover and holder can still be obtained.

The advantage of this present invention is that the mechanism requires less force to use and is easier to operate. The pop-up and roll-back brew head is designed to let the brew head rise up automatically. In addition, this invention facilitates the operator's use of only one hand to lock and release the brew head.

### SUMMARY OF THE INVENTION

In accordance with these and other objects of the invention, a brief summary of the present invention is presented. Some simplifications and omission may be made in the following summary, which is intended to highlight and introduce some aspects of the present invention, but not to limit its scope. Detailed descriptions of a preferred exemplary embodiment adequate to allow those of ordinary skill in the art to make and use the invention concepts will follow in later sections.

The brew head assembly of a coffee maker can be considered as three main parts: a slide assembly, a sealing assembly, and a pop-up and a roll-back assembly.

The slide assembly is made up of a lever, push rod, a slider part, a slider spring, and a lid mount. These parts are assembled together after molding.

The sealing assembly is made up of an "O" ring, a water spreader top, a seal ring, a water spreader bottom, a metal pod filter, a coffee collector, and a brew head bottom. These parts are assembled together.

The pop-up and roll-back assembly is made up of a lift platform, a lift platform spring, hinge pins, a hinge spring, and a brew head base. These parts are assembled together.

The invention is designed to be used as follows: the brew head assembly is normally closed on the machine. Before brewing coffee, a coffee pod should be placed in the metal pod filter. To release the lock on the brew head, the operator needs only use one hand to push the lever forward.

The lock is controlled by two parts: the three legs of the slider and the three mounts on the brew head base. The forward and backward movements of the slider will produce the locking and releasing actions. When the lever is pushed forward, the push rod that is assembled on the slider will push the slider forward so that the brew head is released. When the lever is pulled back, the push rod will put back the slider so that the brew head is locked.

After the lock is released, the lift platform spring will cause the lift platform to pop up. The hinge spring rolls up the lid mount.

The seal function depends on the seal ring. The special shape of the seal ring can bear one (1) to four (4) bar pressure. During the brewing cycle, the back pressure on the pod will raise the sealing assembly a little bit. The small gap allows the two flaps on the seal ring to extend slightly. This extension of the flap end can improve the sealing. This little rise up of the seal ring helps to better adjust the thickness of brewed coffee.

### DETAILED DESCRIPTION OF THE FIGURES

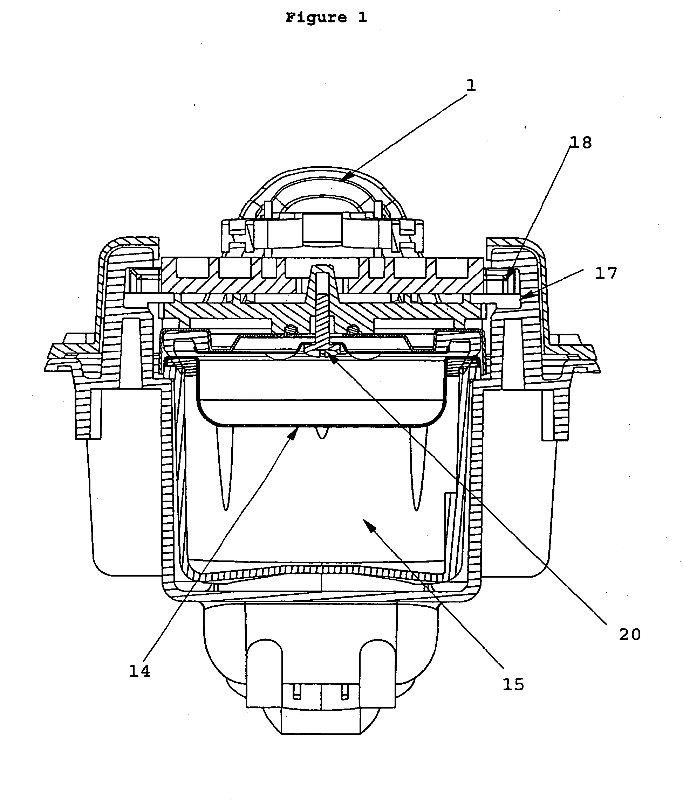

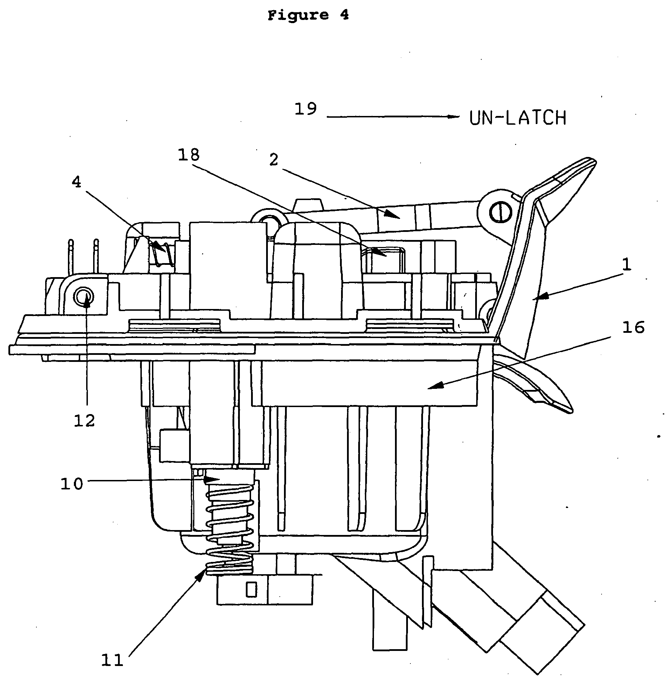

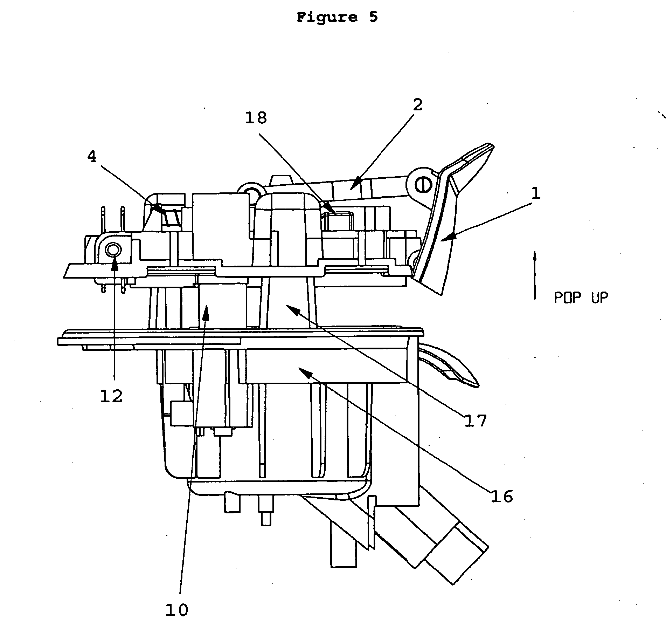

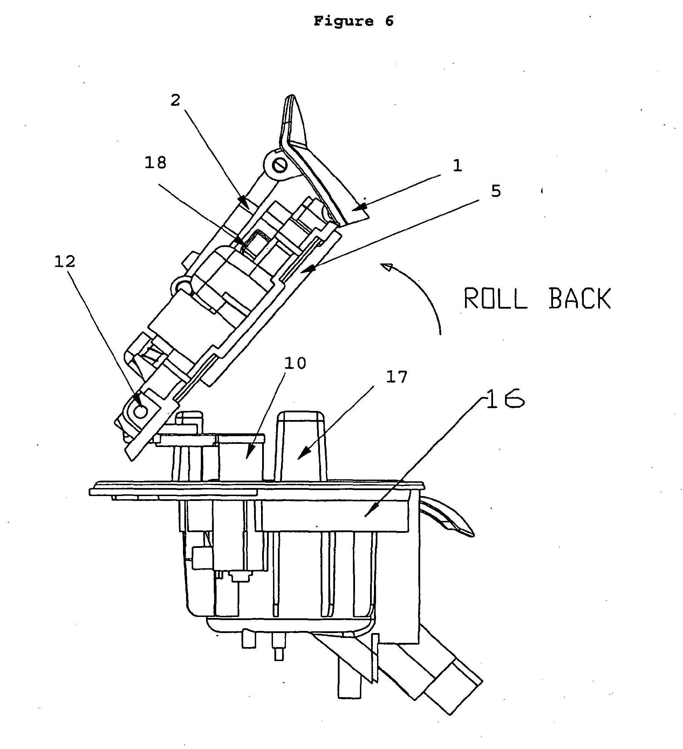

The accompanying drawing illustrates diagrammatically non-limitative embodiment of the invention. One embodiment of the invention is shown in Figure 1 to Figure 6.

The invention relates to a brew head of a coffee maker having a locking mechanism which can be operated using one-hand and which can sustain one (1) to four (4) bar back pressure. The concept of this invention is shown in Figure 1 to Figure 6.

Figure 1 is a cross-sectional illustration of the brew head assembly of the present invention.

Figure 2 is an exploded view of the sliding assembly and the pop-up and roll-back assembly of the present invention.

Figure 3 is an exploded view of the sealing assembly of the present invention.

Figure 4 is a side view of brew head and locking mechanism of the present invention in the latched position. The locking mechanism and brew head can be un-latched using one hand by pulling the lever 1 in the direction of arrow 19.

Figure 5 is a side view of the brew head and locking mechanism of the present invention illustrating the pop-up action of the lid mount and the lift platform.

Figure 6 is a side view of brew head and locking mechanism of the present invention illustrating the roll-back action of the lid mount.

The present invention will be described in connection with a preferred embodiment, however, it will be understood that this is no intent to limit the invention to the embodiment described. On the contrary, the intent is to cover all alternatives, modifications, and equivalents as may be included within the spirit and scope of the invention as defined by the appended claims.

### DETAILED DESCRIPTION OF THE INVENTION

This invention provides a brew head assembly of a coffee maker as defined in claim 1, which amongst others comprises: a slide assembly, a sealing assembly, and a pop-up and roll-back assembly, operatively linked to sustain pressure up to four (4) bars. In an embodiment, the slide assembly comprises a lever, push rod, slider part, slider spring, and a lid mount.

In another embodiment, the sealing assembly comprises an "O" ring, a water spreader top, a seal ring, a water spreader bottom, a metal pod filter, a coffee collector, and a brew head bottom. In a further embodiment, the shape of the seal ring is round with a two-flap end capable of withstanding pressure up to four (4) bars. In a further embodiment, the seal ring is made of silicone rubber.

In a further embodiment, the coffee pod/coffee inside the metal pod filter creates a back pressure for a little rise up of the sealing assembly. The pop-up and roll-back assembly comprises a lift platform, a lift platform spring, a hinge pins, a hinge spring, and a brew head base. In a further embodiment, the lift platform comprises at least two legs for pop-up action. In a further embodiment, the roll up or pivot of the lid mount is assisted by a hinge spring.

In a further embodiment, the slide assembly comprises: a lever; a slider operatively linked to the lever by a push rod; and a slider spring, wherein the lever, the slider, the push rod and the slider spring are operatively fixed on a lid mount. In a further embodiment, the slider is made of aluminum or other suitable material capable of providing sturdy support.

In a further embodiment, the sealing assembly comprises: an "O" ring, a water spreader top; a seal ring; a water spreader bottom; a metal pod filter; and a coffee collector. In a further embodiment, the seal ring is made of silicone rubber or other suitable material capable of preventing leaks at pressure of up to four (4) bars.

In a further embodiment, the pop-up and roll-back assembly comprises: a lift platform having at least two legs operatively moveably attached to a brew head base, wherein a lift platform spring is placed on at least one leg of the lift platform; and a hinge pin which operatively links a hinge spring and the slide assembly to the lift platform.

This invention provides a method as defined in claim 15 for one-hand operation of a locking device of a coffee maker comprising: using one hand to pull a lever forward to release a lock which is controlled by a slider and three mounts on a brew head base, wherein the back-and-forth movement of the slider will produce an action of locking or releasing a brew head; moving the lever forward, a push rod assembled on the slider will push the slider forward and release the brew head, or pushing the lever back will push back the slider and lock the brew head; and releasing the brew head, wherein a lift platform will move upward, assisted by a lift platform spring, and a lid mount will roll-up, assisted by a hinge spring. In an embodiment, the slider comprises at least three legs. In another embodiment, the counter side holes for locking are located on the brew head base.

The brewing head assembly of the present invention comprises a slide assembly, a sealing assembly and a pop-up and roll-back assembly, all operatively linked to sustain pressure of up to four (4) bars. The slide assembly of further comprises a lever operatively linked to a slider by a push rod, and slider spring, all operatively fixed on the lid mount. When the lever is pushed back, the slider will move, and the three legs (bulging tabs) on the slider will fit into the holes of the mount on the brew head base. The brewing head assembly can be opened by pulling the lever, preferably with one hand, and the lid mount will automatically pop-up and roll-back by and through the respectively upward and rotating/uncoiling actions of the lift platform spring and the hinge spring. The sealing assembly comprises an "O" ring; a water spreader top; a seal ring; a water spreader bottom; a metal pod filter; and a coffee collector. The "O" ring is used to prevent the leaking of water between the water spreader top and the lid mount. When the lid mount and brew head base are in the close position, the water spreader top and the water spreader bottom are pressed against seal ring to prevent fluids from leaking. The pop-up and roll-back assembly comprises a lift platform having at least two legs operatively moveably attached to a brew head base, wherein a lift platform spring is placed on at least one leg of the lift platform; and a hinge pin which operatively links a hinge spring and the slide assembly to the lift platform.

The sealing assembly of the brew head assembly of the present invention is mounted beneath the lid mount and is comprised of an "O" ring, water spreader top, water spreader bottom, radial seal ring, metal pod filter and coffee collector. The "O" ring is used to prevent leaks between the water spreader top and the lid mount. The radial seal ring, the upper rim of the metal pod filter, and the top rim of the coffee collector are used to provide sealing between the lid mount and the brew head base. The sealing assembly is secured/locked or held in place by pushing the lid mount downward, and then pushing the lever backward or inward, which causes the three legs on the slider to engage the corresponding holes/recess on the brew head base. The three legs on the slider and the corresponding holes/recesses on the brew head base creates a three point lock to provide sealing between the lid mount and the brew head base with the sealing assembly.

### Examples

For a general understanding of the present invention, reference is made to the drawings.

The locking mechanism of the brew head assembly of the present invention is designed for one-hand operation and tolerates up to four (4) pressure bars. The locking mechanism is mainly used on the pod-type machine and the spoon-brewer machine. Other types of coffee machines which can use the one-hand operable locking mechanism of the present invention include but are not limited to drip-type, filter-type and single-cup coffee makers. To prevent water from leaking, a silicone rubber seal ring is used on the brew head. The silicone rubber seal is fixed in between the water spreader top and water spreader bottom. The operation of the locking mechanism is as follows: When the lever is pushed back and the slider moves, three legs on the slider will fit the holes on the brew head bottom. The fitting will keep the seal ring pressed down to the metal pod filter. At this stage, the brew cycle can be started, and the back pressure above the pod will make the slider rise up slightly. The special shape of the seal ring will make for better sealing. As the brewing is done, the user may use one hand to pull the lever. The slider will move forward or outward and release the lock. The brew head will pop up and roll back. Opening and closing the brew head is thus made easy.

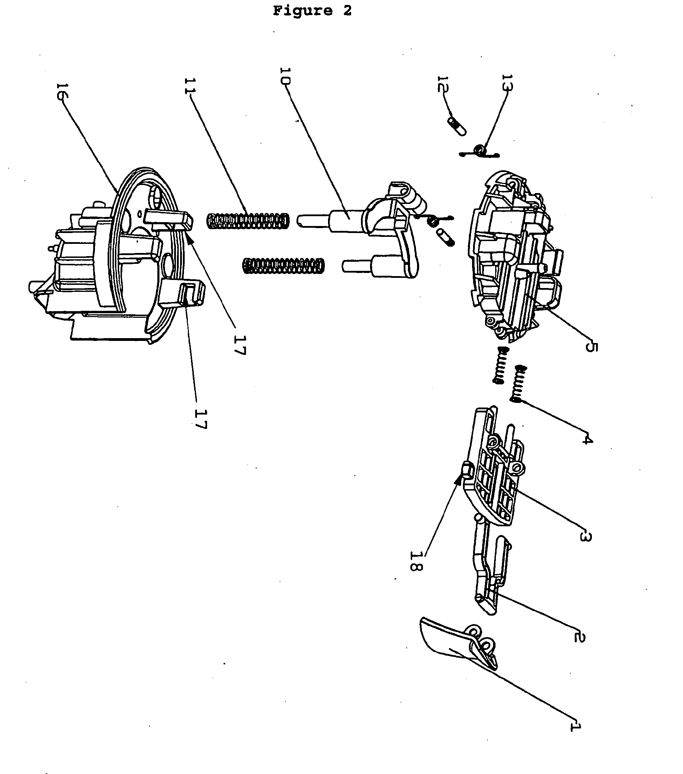

Figure 2 is the exploded view showing the components of the slider assembly and the pop-up and roll-back assembly. As shown, lever 1 is pulled out for un-latching. The push rod 2 links the slider 3 and the lever 1. The slider is made of aluminum material to render sturdier support. The slider spring 4 is used to prevent the lever 1 fall back in un-latch stage. Parts 1 to 4 are fixed on the lid mount 5. Parts 1 to 5 make up the slider assembly.
The other parts are for the pop-up and roll-back action. Brew head base 16 is the base which links the whole assembly. Lift platform 10 is the part that links the slider assembly to the brew head base 16. The hinge pin 12 is to fix the hinge spring 13 and the slider assembly to the lift platform. The lift platform 10 is also made of aluminum to provide stronger support. The lift platform spring 11 is placed on the two legs of the lift platform 10 to make the pop-up action. The hinge spring 13 is used for the roll-back action.

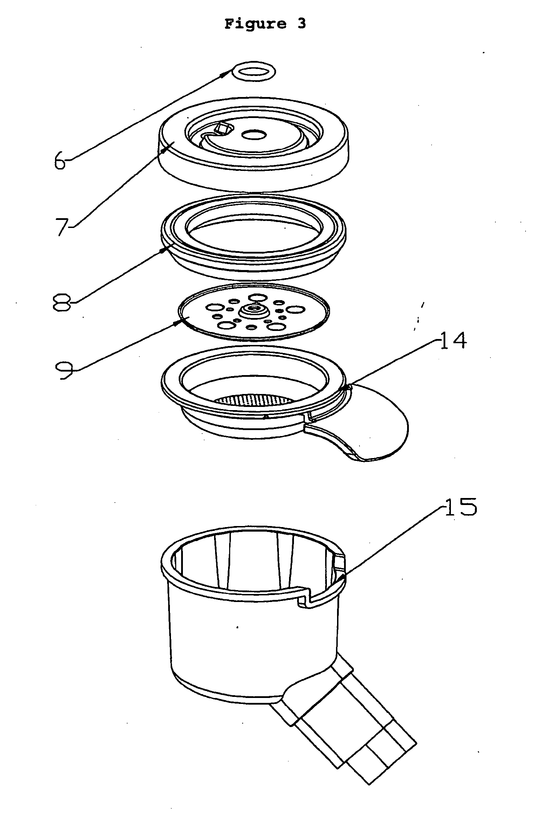

Figure 3 is the sealing assembly. From the Figure 1, it can be seen that the sealing assembly are mounted on the under side of the lid mount 5. This "O" ring 6 is used to prevent the leaking of water between the water spreader top 7 and the lid mount 5. The water spreader top 7 and the water spreader bottom 9 are to press the seal ring 8 and are mounted on the lid mount 5 by screw 20. The round with two flaps on upper and lower seal rings 8 is for the sealing on the brew head. The material of seal ring 8 is silicone rubber. The metal pod filter 14 is used for the placing of the coffee pod. The upper rim is to help sealing. The coffee collector 15 is for the brewed coffee, which flows to the outside through a spout below which the cup is placed. The top rim on the coffee collector 15 is also for sealing.

This invention provides a brew head assembly of a coffee maker as defined in claim 1..

According to an embodiment the slide assembly comprises a lever, push rod, a slider part, a slider spring, and a lid mount. In an embodiment, the slide assembly is as set forth in Figure 2.

According to an embodiment the sealing assembly comprises an "O" ring, a water spreader top, a seal ring, a water spreader bottom, a metal pod filter, a coffee collector, and a brew head bottom. In an embodiment, the sealing assembly is set forth in Figure 3.

The shape of the seal ring may be round with a two-flap end. The materials include but are not limited to silicone rubber. Other materials may be used provided that they are capable of withstanding pressure up to four (4) bars.

The coffee pod inside the metal pod filter creates the back pressure for a little rise-up in the sealing assembly.

This invention provides a pop-up and roll-back assembly comprising a lift platform, a lift platform spring, a hinge pin, a hinge spring and a brew head base. In an embodiment, the pop- up and roll-back assembly is set forth in Figure 1.

According to an embodiment the lift platform comprises at least two legs for pop-up action. In an embodiment, the roll up of a lid mount is by the hinge spring.

In an embodiment, the slider comprises at least three legs 18.

In another embodiment, the counter side holes 17 for locking are on the brew head base 16.

## Claims

1. A brew head assembly of a coffee maker comprising: a slide assembly, a sealing assembly, and a pop-up and roll-back assembly, operatively linked to sustain pressure up to four (4) bars **characterized in that** the pop-up and roll-back assembly comprises a lift platform (10), a lift platform spring (11), a hinge pin (12), a hinge spring (13), and a brew head base (16).

2. The brew head assembly of claim 1,
wherein the lift platform (10) comprises at least two legs for pop-up action.

3. The brew head assembly of claim 2, wherein the at least two legs of the lift platform (10) are operatively moveably attached to a brew head base (16), the lift platform spring (11) is placed on at least one leg of the lift platform (10) and the hinge pin (12) operatively links the hinge spring (13) and the slide assembly to the lift platform (10).

4. The brew head assembly of claim 1, 2 or 3,
wherein the slide assembly comprises a lever (1), a slider (3), a push rod (2), a slider spring (4), and a lid mount (5).

5. The brew head assembly of claim 4, wherein the slider (3) is operatively linked to the lever (1) by a push rod (2) and wherein the lever (1), the slider (3), the push rod (2) and the slider spring (4) are operatively fixed on the lid mount (5).

6. The brew head assembly of claim 4 or 5,
wherein the slider (3)comprises at least three legs (18).

7. The brew head assembly of claim 4,5 or 6,
wherein the slider (3) is made of aluminum or other suitable material capable of providing sturdy support.

8. The brew head assembly of any of previous claims wherein counter side holes (17) for locking are placed on the brew head base (16).

9. The brew head assembly of any of claim 4 to 8,
wherein the roll up or pivot of the lid mount (5) is assisted by the hinge spring (13).

10. The brew head assembly of any of previous claim,
wherein the sealing assembly comprises an "O" ring (6), a water spreader top (7), a seal ring (8), a water spreader bottom (9), a metal pod filter (14), a coffee collector (15), and a brew head base (16).

11. The brew head assembly of claim 10,
wherein the shape of the seal ring (8) is round with a two-flap end capable of withstanding pressure up to four (4) bars.

12. The brew head assembly of claim 10 or 11 wherein the seal ring (8) is made of silicone rubber.

13. The brew head assembly of claim 10,
wherein the metal pod filter (14) creates a back pressure for a little rise up of the sealing assembly.

14. A machine comprising the brew head assembly of any one of claims 1 to 13.

15. A method for one-hand operation of a locking device of a coffee maker comprising using the machine of claim 14.

## Patentansprüche

1. Brühkopfbaugruppe einer Kaffeemaschine, die Folgendes umfasst: eine Schiebebaugruppe, eine Dichtungsbaugruppe und eine Hebe- und Rückklappbaugruppe, die wirkverbunden sind, um einen Druck von maximal vier (4) Bar aufrecht zu erhalten, **dadurch gekennzeichnet, dass** die Hebe- und Rückklappbaugruppe eine Hubplattform (10), eine Hubplattformfeder (11), einen Scharnierbolzen (12), eine Scharnierfeder (13) und eine Brühkopfbasis (16) umfasst.

2. Brühkopfbaugruppe nach Anspruch 1, wobei die Hubplattform (10) mindestens zwei Säulen für einen Hebevorgang umfasst.

3. Brühkopfbaugruppe nach Anspruch 2, wobei die mindestens zwei Säulen der Hubplattform (10) beweglich mit einer Brühkopfbasis (16) wirkverbunden sind, die Hubplattformfeder (11) an mindestens einer Säule der Hubplattform (10) angeordnet ist und der Scharnierbolzen (12) die Scharnierfeder (13) und die Schiebebaugruppe mit der Hubplattform (10) wirkverbindet.

4. Brühkopfbaugruppe nach Anspruch 1, 2 oder 3, wobei die Schiebebaugruppe einen Hebel (1), einen Schieber (3), eine Schubstange (2), eine Schieberfeder (4) und eine Deckelhalterung (5) umfasst.

5. Brühkopfbaugruppe nach Anspruch 4, wobei der Schieber (3) über eine Schubstange (2) mit dem Hebel (1) wirkverbunden ist und wobei der Hebel (1), der Schieber (3), die Schubstange (2) und die Schieberfeder (4) an der Deckelhalterung (5) wirkbefestigt sind.

6. Brühkopfbaugruppe nach Anspruch 4 oder 5, wobei der Schieber (3) mindestens drei Säulen (18) umfasst.

7. Brühkopfbaugruppe nach Anspruch 4, 5 oder 6, wobei der Schieber (3) aus Aluminium oder einem anderen geeigneten Material besteht, das in der Lage ist, eine stabile Stützung zu bieten.

8. Brühkopfbaugruppe nach einem der vorangehenden Ansprüche, wobei Gegenseitenlöcher (17) zum Verriegeln an der Brühkopfbasis (16) angeordnet sind.

9. Brühkopfbaugruppe nach einem der Ansprüche 4 bis 8, wobei das Klappen oder Schwenken der Deckelhalterung (5) durch die Scharnierfeder (13) unterstützt wird.

10. Brühkopfbaugruppe nach einem der vorangehenden Ansprüche, wobei die Dichtungsbaugruppe einen "O"-Ring (6), ein Wasserverteileroberteil (7), einen Dichtring (8), ein Wasserverteilerunterteil (9), einen Metallsockelfilter (14), einen Kaffeefänger (15) und eine Brühkopfbasis (16) umfasst.

11. Brühkopfbaugruppe nach Anspruch 10, wobei der Dichtring (8) eine runde Form hat und ein mit zwei Klappen versehenes Ende aufweist, das einem Druck bis zu vier (4) Bar widerstehen kann.

12. Brühkopfbaugruppe nach Anspruch 10 oder 11, wobei der Dichtring (8) aus Silikongummi besteht.

13. Brühkopfbaugruppe nach Anspruch 10, wobei der Metallsockelfilter (14) einen Staudruck für ein geringfügiges Anheben der Dichtungsbaugruppe erzeugt.

14. Maschine, die die Brühkopfbaugruppe nach einem der Ansprüche 1 bis 13 umfasst.

15. Verfahren für eine einhändige Bedienung einer Verriegelungsvorrichtung einer Kaffeemaschine, das die Verwendung der Maschine nach Anspruch 14 umfasst.

## Revendications

1. Ensemble de tête d'infusion d'une cafetière comprenant : un ensemble coulissant, un ensemble d'étanchéité et un ensemble de renvoi automatique et de reprise, reliés opérationnellement afin de soutenir une pression allant jusqu'à quatre (4) bars, **caractérisé en ce que** l'ensemble de renvoi automatique et de reprise comprend une plate-forme de levage (10), un ressort de plate-forme de levage (11), un axe d'articulation (12), un ressort d'articulation (13) et une base de tête d'infusion (16).

2. Ensemble de tête d'infusion selon la revendication 1, dans lequel la plate-forme de levage (10) comprend au moins deux pieds pour une action de renvoi automatique.

3. Ensemble de tête d'infusion selon la revendication 2, dans lequel les au moins deux pieds de la plate-forme de levage (10) sont fixés de manière déplaçable opérationnellement à une base de tête d'infusion (16), le ressort de plate-forme de levage (11) est placé sur au moins un pied de la plate-forme de levage (10) et l'axe d'articulation (12) relie opérationnellement le ressort d'articulation (13) et l'ensemble coulissant à la plate-forme de levage (10).

4. Ensemble de tête d'infusion selon la revendication 1,2 ou 3,
dans lequel l'ensemble coulissant comprend un levier (1), un tiroir (3), une tige de poussée (2), un ressort de tiroir (4) et une monture de couvercle (5).

5. Ensemble de tête d'infusion selon la revendication 4, dans lequel le tiroir (3) est relié opérationnellement au levier (1) par une tige de poussée (2) et dans lequel le levier (1), le tiroir (3), la tige de poussée (2) et le ressort de tiroir (4) sont fixés opérationnellement sur la monture de couvercle (5).

6. Ensemble de tête d'infusion selon la revendication 4 ou 5,
dans lequel le tiroir (3) comprend au moins trois pieds (18).

7. Ensemble de tête d'infusion selon la revendication 4,5 ou 6,
dans lequel le tiroir (3) est constitué d'aluminium ou d'un autre matériau approprié en mesure de fournir de la stabilité.

8. Ensemble de tête d'infusion selon une quelconque des revendications précédentes, dans lequel des trous latéraux opposés (17) à des fins de verrouillage sont placés sur la base de tête d'infusion (16).

9. Ensemble de tête d'infusion selon une quelconque des revendications 4 à 8,
dans lequel la projection vers le haut ou le pivotement de la monture de couvercle (5) est assisté par le ressort d'articulation (13).

10. Ensemble de tête d'infusion selon une quelconque des revendications précédentes,
dans lequel l'ensemble d'étanchéité comprend un joint torique (6), un sommet de distributeur d'eau (7), une bague d'étanchéité (8), une base de distributeur d'eau (9), un filtre à coupelle métallique (14), un collecteur de café (15) et une base de tête d'infusion (16).

11. Ensemble de tête d'infusion selon la revendication 10,
dans lequel la forme de la bague d'étanchéité (8) est ronde avec une extrémité à deux rabats capable de soutenir une pression allant jusqu'à quatre (4) bars.

12. Ensemble de tête d'infusion selon la revendication 10 ou 11, dans lequel la bague d'étanchéité (8) est constituée de caoutchouc siliconé.

13. Ensemble de tête d'infusion selon la revendication 10,
dans lequel le filtre à coupelle métallique (14) crée une contre-pression afin de soulever légèrement l'ensemble d'étanchéité.

14. Machine comprenant l'ensemble de tête d'infusion selon une quelconque des revendications 1 à 13.

15. Procédé de manipulation simple d'un dispositif de verrouillage d'une cafetière comprenant l'utilisation de la machine selon la revendication 14.
